# EUROPÄISCHE PATENTSCHRIFT

(11) **EP 0 913 417 B1**
(45) Veröffentlichungstag und Bekanntmachung des Hinweises auf die Patenterteilung: **01.12.2004**
(21) Anmeldenummer: 98119095.2
(22) Anmeldetag: 09.10.1998
(51) Int. Cl.: C08G 18/42, C08G 63/20

(54) **Polyesteralkohole, Verfahren zu deren Herstellung und deren Verwendung**
Polyester alcohols, process for their manufacture and their use
Alcools polyester, leur procédé de préparation et leur utilisation

(30) Priorität: 31.10.1997 DE 19748142
(43) Veröffentlichungstag der Anmeldung: 06.05.1999
(73) Patentinhaber: BASF AKTIENGESELLSCHAFT, 67056 Ludwigshafen (DE)
(72) Erfinder: Guettes, Bernd, 03238 Sallgast (DE); Lampert, Klaus Dr., 67273 Weisenheim (DE); Tischer, Gerlinde, 01945 Ruhland (DE); Berger, Elke, 01968 Senftenberg (DE)

(56) Entgegenhaltungen:
- EP-A- 0 497 511
- US-A- 4 267 239
- US-A- 4 365 039

## Beschreibung

Die Erfindung betrifft ein Verfahren zur Herstellung von Polyesteralkoholen durch Kondensation von (a) Carbonsäuren und/oder Carbonsäurederivaten mit (b) Alkoholen. Ferner betrifft die Erfindung die nach einem solchen Verfahren herstellbaren Polyesteralkohole, Verfahren zur Herstellung von Polyisocyanat-Polyadditionsprodukten sowie die nach einem solchen Verfahren herstellbaren Polyisocyanat-Polyadditionsprodukte.

Polyesteralkohole, auch Polyesterole genannt, stellt man bekannterweise aus Polycarbonsäuren und mehrfunktionellen Alkoholen durch Kondensation in der Schmelze her, wobei üblicherweise Katalysatoren wie z.B. Zinnverbindungen eingesetzt werden. Nachteilig bei einer Verwendung dieser Polyesterole beispielsweise bei der Herstellung von Polyisocyanat-Polyadditionsprodukten wirkt sich die im Vergleich zu Polyetherpolyalkoholen geringere Hydrolysestabilität der Polyesterole, das Auftreten von Trübungen, Inhomogenitäten und Produktausfällungen in den Polyesterolen insbesondere bei Verwendung von Polyethylenterephthalat (PET) oder Polybutylenterephthalaten, z.B. (PBT)-Recyclaten, bei der Herstellung der Polyesterole sowie die schlechte Mischbarkeit mit weiteren Komponenten zur Herstellung der Polyisocyanat-Polyadditionsprodukte aus. Nach DE-A 34 35 014 werden Recyclate gemeinsam mit Carbonsäuregemischen und Diolen bei der Herstellung von Polyesteralkoholen eingesetzt. Eine Polykondensation, die zu einem Produkt mit besserer Komponentenmischbarkeit und mit einer sehr guten Eignung zur Herstellung von Polyisocyanat-Polyadditionsprodukten führt, ist nach diesem Verfahren allerdings nicht möglich.

Die Kondensation von aromatischen und aliphatischen Polycarbonsäuren mit Diolen zur Herstellung von Polyesteralkoholen für die Produktion von wärmehärtenden Überzugsmassen wird in DE-A 196 08 116 beschrieben. Nachteilig an diesem Verfahren ist, daß die Polyesteralkohole nur bedingt zur Herstellung von Polyurethanen, insbesondere geschäumten Polyurethanen geeignet sind und zudem ein Einsatz von Recyclaten zu unbefriedigenden Produkten führt.

Die Herstellung und Verwendung von Polyisocyanat-Polyadditionsprodukten (beispielsweise Polyurethanen) durch Umsetzung von Isocyanaten mit gegenüber Isocyanaten reaktiven Verbindungen gegebenenfalls in Gegenwart von Treibmitteln, Katalysatoren, Zusatz- und Hilfsstoffen ist allgemein bekannt.

Die Aufgabe der vorliegenden Erfindung bestand somit darin, ein Verfahren zur Herstellung von Polyesteralkoholen mit einer umfassenden Polyolmischbarkeit durch Kondensation von aliphatischen Alkoholen ggf. auch durch Mitumsetzung von Polyethylen- bzw. Polybutylenterephthalat mit organischen Carbonsäuren unter Vermeidung üblicher Nebenreaktionen, die zu unlöslichen Oligomerbestandteilen und zu leicht flüchtigen sog. Foggingbestandteilen führen, zu entwickeln.

Diese Aufgabe konnte erfindungsgemäß dadurch gelöst werden, daß man als (a) ein Gemisch einsetzt, das enthält
a1) aromatische und/oder araliphatische Carbonsäuren mit mindestens 2 Carboxylgruppen und/oder derivatisierten Carboxylgruppen,
a2) aliphatische mehrfunktionelle Carbonsäuren mit mindestens 2 Carboxylgruppen und/oder derivatisierten Carboxylgruppen und
a3) Monocarbonsäuren und/oder Monocarbonsäurederivate.

Man setzt bei der Kondensation als (a) ein Gemisch ein, das enthält
50 bis 79 Gew.-% (a1),
1 bis 10 Gew.-% (a2),
20 bis 40 Gew.-% (a3).

Die Gewichtsangaben beziehen sich auf das Gewicht des Gemisches (a).

Die Substanzen (a1) bis (a3) sowie (b) für die Kondensation werden im Folgenden beschrieben:

Als (a1) kann man allgemein bekannte aromatische und/oder araliphatische, bevorzugt aromatische, Carbonsäuren und/oder deren Carbonsäurederivate einsetzen, die bevorzugt mindestens 2, besonders bevorzugt 2 und/oder 3 Carboxylgruppen und/oder derivatisierte Carboxylgruppen enthalten. Beispielsweise kann man als (a1) Phthalsäure, Isophthalsäure, Terephthalsäure, Trimellithsäure und/oder die entsprechenden Dicarbonsäurederivate verwenden, z.B. Anhydride, Säurehalogenide oder Diester mit Alkoholen mit 1 bis 4 Kohlenstoffatomen, wobei die Ester ein Molekularewicht von 300 bis 4000 ausweisen können.

Als (a2) können allgemein übliche aliphatische, gesättigte und/oder bevorzugt ungesättigte, Carbonsäuren und/oder deren Carbonsäurederivate verwendet werden, die mindestens 2, bevorzugt 2 und/oder 3 Carboxylgruppen und/oder derivatisierte Carboxylgruppen enthalten. Beispielsweise kann man als (a2) Adipinsäure, Bernsteinsäure, Glutarsäure, Korksäure, Azelainsäure, Sebacinsäure, Dekandicarbonsäure, Maleinsäure, Fumarsäure, Malonsäure, Pimelinsäure, Undecandicarbonsäure, Dodecandicarbonsäure, 1,4-Cyclohexandicarbonsäure, Hexahydrophthalsäureanhydrid einsetzen. Bevorzugt werden als (a2) mindestens 5 Gew.-%, bezogen auf das Gewicht der Komponente (a2), an ungesättigten aliphatischen Carbonsäuren und/oder Carbonsäurenderivaten, beispielsweise Maleinsäure und/oder Maleinsäureanhydrid, eingesetzt.

Als derivatisierte Carbonsäuren kommen beispielsweise die Anhydride, die Säurehalogenide oder die Diester der beispielhaft genannten Carbonsäuren in Betracht.

Als (a3) können allgemein übliche aliphatische, araliphatische und/oder aromatische, bevorzugt aromatische Monocarbonsäuren, beispielsweise Benzoesäure, und/oder deren Moncarbonsäurederivate eingesetzt werden. Beispielsweise können Ethansäure, Propansäure, Butansäure, Hexansäure, Phenylessigsäure, Zimtsäure, 2-Methylpropansäure, 2-Phenylbenzoesäure als (a3) verwendet werden.

Für die Kondensation können als (b) Alkohole, bevorzugt Alkohole mit mindestens 2 Hydroxylgruppen, beispielsweise die folgenden allgemein üblichen mehrfunktionellen Alkohole eingesetzt werden: Diole wie z.B. Ethan-1,2-diol, Propan-1,2- oder -1,3-diol, 2,2-Dimethylpropan-1,3-diol, Butan-1,4-diol; Pentan-1,5-diol, Hexan-1,6-diol, Cyclohexan-1,4-dimethanol, Bisphenol A, Polyoxyalkylenglykole wie Diethylenglykol, Triethylenglykol, Tetraethylenglykol und höhermolekulare Ethylenglykole, Polyoxypropylenglykole wie z.B. Dipropylenglykol, Tripropylenglykol, Tetrapropylenglykol und höhermolekulare Propylenglykole, Polytetrahydrofurane mit Molekulargewichten von 250 bis 2000, Triole wie Trimethylolpropan, Glyzerol, Hexantriol oder Mischungen mit mindestens zwei der genannten Alkohole. Bevorzugt verwendet man Diole und/oder Triole, besonders bevorzugt Ethylenglykol oder Butylenglykol-1,4 oder Mischungen, die mindestens zwei dieser Diole enthalten.

Zur Herstellung der Polyesterpolyole können die (a) Carbonsäuren und/oder Carbonsäurederivate mit den (b) Alkoholen katalysatorfrei oder vorzugsweise in Gegenwart von Veresterungskatalysatoren, zwreckmäßigerweise in einer Atmosphäre aus Inertgas, wie z.B. Stickstoff, Kohlenmonoxid, Helium, Argon u.a., in der Schmelze bei Temperaturen von 120 bis 250°C, vorzugsweise 150 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 10 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Als Katalysatoren können beispielsweise zweiwertige oder vierwertige anorganische oder organische Zinnverbindungen und/oder Titanverbindungen, bevorzugt Zinntetrachlorid, Dibutylzinndilaurat, Titantetrabutylat, Titantetraisopropylat verwendet werden. Zum Beispiel kann man als zweiwertige Zinnverbindung einsetzen: Zinn-II-oxid, Zinn-II-chlorid, Zinn-II-sulfat, Zinn-II-sulfid, Zinn-II-acetat. Beispielsweise kann man Zinn-II-Salze von Alkancarbonsäuren mit mindestens drei Kohlenstoffatomen wie z.B. das Zinn-II-salz der 2-Ethylhexansäure, das auch unter dem Namen Zinn-(II)-octoat bekannt ist, einsetzen. Die Katalysatoren können in einer Menge von 0,5 bis 10000 ppm, bezogen auf das Gewicht der Mischung vor der Kondensation, eingesetzt werden.

Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden (a) und (b) bevorzugt in einem molaren Verhältnis der Carbonsäuregruppen und/oder der Carbonsäurederivatgruppen zu den Hydroxylgruppen von 1 : 1 bis 1,8, vorzugsweise 1 : 1,05 bis 1,2, polykondensiert.

Die Kondensation führt man bis zu einer Säurezahl des Polyesteralkohols von 0,1 bis 5 mg KOH/g, vorzugsweise 0,1 bis 2 mg KOH/g durch.

Die Polyesteralkohole weisen üblicherweise ein Zahlenmittel des Molekulargewichtes von 400 bis 4500, vorzugsweise 450 bis 2500 und eine Funktionalität von 2 bis 4 auf.

Verwendet werden die Polyesterole unter anderem als gegenüber Isocyanaten reaktive Verbindungen bei der Herstellung von Polyisocyanat-Polyadditionsverbindungen, beispielsweise kompakten oder zelligen, thermoplastischen oder vernetzten Polyurethanen, Hart-, Halbhart- oder Weichschaumstoffen auf der Basis von Polyurethanen oder Polyurethanen/Polyisocyanuraten, durch Umsetzung von Isocyanaten mit gegenüber Isocyanaten reaktiven Verbindungen gegebenenfalls in Gegenwart von üblichen Treibmitteln, Katalysatoren und/oder Zusatz- und/oder Hilfsstoffen. Die Herstellung der Polyisocyanat-Polyadditionsprodukte mit den erfindungsgemäßen Polyesteralkoholen kann nach allgemein üblichen Verfahren kontinuierlich oder diskontinuierlich durchgeführt werden. Die Umsetzung kann nach dem in der Literatur beschriebenen one-shot Verfahren im allgemein üblichen Temperaturbereich von 30°C bis 180°C, vorzugsweise 40°C bis 150°C mit einem Äquivalenzverhältnis von NCO- Gruppen zur Summe der reaktiven Wasserstoffe von 0,8 bis 1,3 : 1, vorzugsweise 0,95 bis 1,1 : 1 oder beispielsweise nach dem bekannten Prepolymerverfahren, bei dem insbesondere Isocyanat aufweisende Prepolymere Verwendung finden, durchgeführt werden.
Falls die Polyisocyanat-Polyadditionsprodukte zumindest teilweise Isocyanuratgruppen gebunden enthalten sollen, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Herstellung der Polyisocyanat-Polyadditionsprodukte kann je nach Produkt nach üblichen Verfahren, beispielsweise in offenen oder geschlossenen, gegebenenfalls beheizbaren Formen, durch Extrusion oder mit bekannten Bandanlagen erfolgen.

Als Polyisocyanate für die Polyisocyanat-Polyadditionsreaktion können aromatische, aliphatische oder/und cycloaliphatische Diisocyanate verwendet werden. Beispiele für die aromatischen Diisocyanate sind: 1,5-Naphtylen-diisocyanat (1,5-NDI), 2,4- und 2,6-Toluylen-diisocyanat (TDI) sowie deren Gemische, 2,4'-, 2,2'-, und vorzugsweise 4,4'-Diphenylmethan-diisocyanat (MDI) sowie Mischungen aus mindestens zwei dieser Isomere, Polyphenyl-polymethylen-polyisocyanate (Polymer-MDI, PMDI) mit zwei oder mehr aromatischen Systemen, Mischungen aus 2,4'-, 2,2'- und 4,4'-Diphenylmethan-diisocyanaten und Polyphenyl-polymethylen-polyisocyanaten (Roh-MDI), Mischungen aus Roh-MDI und Toluylen-Diisocyanaten, Polyphenyl-Polyisocyanate, 3,3'-Dimethyldiphenyl-diisocyanat, z.B. 3,3'-Dimethyl-4,4'-diisocyanat-diphenyl, 1,2-Diphenylethan-diisocyanat und Phenyldiisocyanat, vorzugsweise 1,4-Phenyldiisocyanat (PPDI). Die aromatischen Isocyanate werden einzeln oder im Gemisch von mindestens zwei verschiedenen Isocyanaten eingesetzt. Als aliphatische, verzweigtkettige oder vorzugsweise lineare, Diisocyanate mit 4 bis 12 Kohlenstoffatomen, vorzugsweise 4 bis 6 Kohlenstoffatomen, werden genannt: 1,12-Dodecan-, 2-Ethyl-1,4-butan-, 2-Methyl-1,5-pentan- oder/und 1,4-Butandiisocyanat, bevorzugt 1,6-Hexamethylen-diisocyanat (HDI). Zu verwenden sind als cycloaliphatische Diisocyanate mit 6 bis 18 Kohlenstoffatomen, vorzugsweise 6 bis 12 Kohlenstoffatomen, mit alkylsubstituierten oder nicht-alkylsubstituierten Cycloalkylrest z.B.: Cyclohexan-1,3- oder/und -1,4-diisocyanat, 2,4- oder/und 2,6-Hexahydro-toluylen-diisocyanat, 4,4'-, 2,4'-, oder/und 2,2' Dicyclohexanmethan-diisocyanat, vorzugsweise 1-Isocyanato-3,3,5,-trimethyl-5-isocyanato--methylcyclohexan (IPDI). Außerdem können allgemein bekannte modifizierte Isocyanate eingesetzt werden.

Gegebenenfalls zusätzlich zu den erfindungsgemäßen Polyesteralkoholen können als allgemein übliche gegenüber Isocyanaten reaktive Verbindungen, im Folgenden auch als Polyole bezeichnet, solche mit einem Molekulargewicht von 60 bis 10000 eingesetzt werden.

Als Polyole werden zweckmäßigerweise solche mit einer Funktionalität von 2 bis 8, vorzugsweise 2 bis 6, und einem Molekulargewicht von 400 bis 8000, vorzugsweise von 400 bis 3000, verwendet, wobei zusätzlich zu diesen Polyolen mit einem Molekulargewicht von 400 bis 8000 Kettenverlängerungs- und/oder Vernetzungsmittel mit einem Molekulargewicht von 60 bis <400 als gegenüber Isocyanaten reaktive Verbindungen eingesetzt werden können. Der Einsatz hängt von den gewünschten Eigenschaften des herzustellenden Polyurethanachaumstoffes ab.

Bewährt haben sich z.B. Polyether-polyamine und/oder vorzugsweise Polyole ausgewählt aus der Gruppe der Polyetherpolyole, Polyesterpolyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole.

Als Polyolkomponenten werden dabei für starre Schäume auf der Basis von Polyisocyanat-Polyadditionsprodukten hochfunktionelle Polyole, insbesondere Polyetherpolyole auf Basis hochfunktioweller Alkohole, Zuckeralkohole, Saccharide und/oder hochfunktioneller Amine, gegebenenfalls im Gemisch mit niederfunktionellen Alkoholen und/oder Aminen, und Propylenoxid und/oder Ethylenoxid, für flexible Schäume 2- und/oder 3-funktionelle Polyether- und/oder Polyesterpolyole auf Basis Glyzerin und/oder Trimethylolpropan und/oder Glykolen und üblichen Alkylenoxiden bzw. aliphatischen und/oder aromatischen Dicarbonsäuren eingesetzt.

Die Polyetherpolyole besitzen eine Funktionalität von vorzugsweise 2 bis 6 und insbesondere 2 bis 4 und Molekulargewichte von 300 bis 3000, vorzugsweise 300 bis 2000 und insbesondere 400 bis 2000.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen nach allgemein bekannten Verfahren hergestellt werden, sowie Polyetherpolyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen,.vorzugsweise 2 bis 6 Kohlenstoffatomen nach allgemein bekannten Verfahren hergestellt werden.

Des Weiteren kommen als gegenüber Isocyanaten reaktive Verbindungen zusätzlich zu den erfindungsgemäßen Polyesteralkoholen bekannte hydroxylgruppenhaltige Polyacetale und/oder Hydroxylgruppen aufweisende Polycarbonate in Betracht.

Als gegenüber Isocyanaten reaktive Verbindungen können des Weiteren Kettenverlängerungs- und/oder Vernetzungsmittel mit einem Molekulargewicht <400 bei dem erfindungsgemäßen Verfahren eingesetzt. werden. Zur Modifizierung der mechanischen Eigenschaften der Polyisocyanat-Polyadditionsprodukte, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können Diole und/oder Triole mit Molekulargewichten <400, vorzugsweise von 60 bis 300 in üblichen Mengen verwendet werden.

Die Polyisocyanat-Polyadditionsprodukte können gegebenenfalls unter Verwendung von üblichen Treibmitteln, beispielsweise allgemein bekannten physikalisch wirkenden Treibmitteln, die bei der Reaktionstemperatur verdampfen, und/oder chemisch wirkenden Treibmitteln, beispielsweise Wasser, die erst nach Reaktion mit einer der Komponenten ein Treibgas entwickeln, hergestellte werden.

Als Katalysatoren zur Herstellung der Polyisocyanat-Polyadditionsprodukte können übliche Katalysatoren, die die Reaktion der gegenüber Isocyanaten reaktiven Verbindungen mit den Isocyanaten beschleunigen, beispielsweise stark basische Verbindungen, tertiäre Amine und/oder Metallsalze, in allgemein üblichen Mengen eingesetzt werden.

Der Reaktionsmischung zur Herstellung der Polyurethanschaumstoffe können gegebenenfalls übliche Hilfsmittel und/oder Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Die nach dem erfindungsgemäßen Verfahren hergestellten Polyurethanweichschaumstoffe weisen üblicherweise eine Dichte von 15 bis 100 kg/m³ auf und werden bevorzugt im Möbel- und Automobilbereich eingesetzt, besonders bevorzugt als Polstermaterial.

Die nach dem erfindungsgemäßen Verfahren hergestellten Polyurethanhartschaumstoffe weisen üblicherweise eine Dichte von 15 bis 150 kg/m³ auf und werden bevorzugt als Isolier- und Dämmaterial, beispielsweise als Sandwichelemente oder zum Ausschäumen von Kühlschrankgehäusen eingesetzt.

Die Erfindung soll beispielhaft mit den. folgenden Beispielen dargestellt werden.

### Beispiel 1: (Vergleichsbeispiel)

In einer Laborrührapparatur mit Temperaturanzeige, Stickstoffanschluß, Füllkörperkolonne und Kühler wurden 97,5 g Phthalsäureanhydrid in 217,4 g Diethylenglykol bei einer Temperatur von 150°C aufgeschmolzen. Dazu wurden insgesamt 347 g Polyethylenterephthalat hinzugefügt und unter ständigem Rühren und einer Temperaturerhöhung auf 220°C innerhalb von 11 Stunden vollständig gelöst. Nach einer Nachreaktionszeit von 3 Stunden zur vollständigen Umesterung entsteht ein hochviskoses, braungrau gefärbtes Produkt, das nach dem Erhalten trüb wurde und folgende Kennwerte aufwies:
Hydroxylzahl = 238 mg KOH/g
Säurezahl = 0,45 mg KOH/g
Wassergehalt = 0,094 %
Viskosität bei 25°C = 77 050 mPas

### Beispiel 2: (Ausführungsbeispiel)

In einer Laborrührapparatur wurden 1064,4 g eines Dicarbonsäuregemisches enthaltend 67 % Phthalsäureanhydrid, 30,6 % Benzoesäure, 2 % Maleinsäureanhydrid, 0,3 % Methylmaleinsäureanhydrid und 0,05 % an Dimethylmaleinsäureanhydrid zusammen mit 100,7 g Monoethylenglykol und 1135,6 g Diethylenglykol bei einer Temperatur von 220°C verestert. Bei Säurezahlen von 13,9 mg KOH/g und 5,9 mg KOH/g wurden jeweils 10 ppm Titantetrabutylat als Katalysator hinzugefügt. Bis zu einer Säurezahl von 35 mg KOH/g wurde die Reaktion unter Normaldruck und danach unter vermindertem Druck bis 3 mbar durchgeführt. Das entstehende niedrigviskose klare Produkt besaß folgende Qualität:
Hydroxylzahl = 244 mg KOH/g
Säurezahl = 1,0 mg KOH/g
Wassergehalt = 0,04 %
Viskosität bei 25°C = 1685 mPas
Viskosität bei 75°C = 51,2 mPas

### Beispiel 3: (Ausführungsbeispiel)

In einem Laborrührreaktor wurden 1980 g eines Dicarbonsäuregemisches, enthaltend 68 % Phthalsäureanhydrid, 29,4 % Benzoesäure, 1,9 % Maleinsäureanhydrid, 0,5 % Methylmaleinsäureanhydrid und 0,03 % Dimethylmaleinsäureanhydrid, mit 228 g Diethylenglykol, 19,8 g Monoethylenglykol und 224 g Polyethylenterephthalat bei einer Temperatur von 160°C innig vermischt und anschließend unter Erhöhung der Temperatur auf 220°C und vermindertem Druck bis 5 mbar vollständig umgeestert. Das entstandene klare dunkelbraune Reaktionsprodukt besitzt die Kennwerte:
Hydroxylzahl = 242,4 mg KOH/g
Säurezahl = 1,2 mg KOH/g
Wassergehalt = 0,018 %
Viskosität bei 25°C = 3730 mPas

### Beispiel 4: (Ausführungsbeispiel).

In einer Laborapparatur, ausgerüstet mit Rührer, Temperaturmeßeinrichtung, Stickstoffeinleitung, Eüllkörperkolonne und Kühler wurden 420 g eines Dicarbonsäuregemisches, enthaltend 66 % Phthalsäureanhydrid, 30,5 % Benzoesäure und 3 % Maleinsäureanhydrid mit 450 g Diethylenglykol, 820 g eines Gemisches aus 48 % cyclischem Ester aus Adipinsäure und Diethylenglykol, 47 % Diethylenglykol und 5 % höhere Oligomere aus Adipinsäure und Diethylenglykol und 824 g Polybutylenterephthalat innig verrührt und bei einer Temperatur von 200°C umgeestert. Bei einer Säurezahl von 30 mg KOH/g wurde die Reaktion unter vermindertem Druck, der bis zu 1 mbar gesteigert wurde, fortgeführt. Das so entstandene Reaktionsprodukt besitzt die folgenden Kennwerte:
Hydroxylzahl = 248 mg KOH/g
Säurezahl = 0,63 mg KOH/g
Wassergehalt = 0,018 %
Viskosität bei 25°C = 4220 mPas

### Beispiel 5: (PUR Hartschaum)

| | |
|---|---|
| 27 | Masseteile eines Polyesterols analog Beispiel 2 |
| 12 | " eines Sorbitpolyethers (OHZ 490 mg KOH/g) |
| 31 | " eines Saccharosepolyethers (OHZ 440 mg KOH/g) |
| 29 | " Trichlorpropylphosphat |
| 2 | " Wasser |
| 0,7 | " Siliconstabilisator |
| 3 | " Dimethylcyclohexylamin und |
| 11 | " R 141 b |

wurden mit 155 Masseteilen Roh-MDI (NCO-Gehalt = 31,0 Masse%) innig vermischt (Kennzahl = 110)

Der entstehende Schaum wies freigeschäumt im Schäumbecher eine Dichte von 42 kg/m³ auf.

Aromatische Polyesteralkohole sind, besonders wenn sie ein hohes Molekulargewicht und damit eine hohe Viskosität aufweisen oder auch aus Terephthalsäureeinheiten aufgebaut sind, mit anderen Polyesterolen nur wenig mischbar. Eine Verbesserung der Mischbarkeit wird erreicht, wenn die Polyesterole erfindungsgemäß als Copolymere synthetisiert werden. Die Verarbeitbarkeit der Polyesterole zu Polyurethanen wird durch die breitere Mischbarkeit der erfindungsgemäßen Polyesteralkohole mit weiteren Polyolen erheblich verbessert. Zudem wird die Viskosität der Polyesteralkohole deutlich erniedrigt. Durch das damit einhergehende bessere Fließverhalten werden positive Effekte im Polyurethan erzielt.

Durch das beschriebene Verfahren treten kaum Nebenreaktionen auf. Ein weiterer bedeutender Vorteil besteht in der fast vollständigen Unterdrückung der Bildung unlöslicher Bestandteile. Damit geingt es, die Lagerstabilität der Polyesterole deutlich zu erhöhen.

Die Mischbarkeit der Polyesterole mit anderen Polyolen ist durch die Verbesserung der Verträglichkeit in einem breiten Verhältnis gegeben.

## Patentansprüche

1. Verfahren zur Herstellung von Polyesteralkoholen durch Kondensation von (a) Carbonsäuren und/oder Carbonsäurederivaten mit (b) Alkoholen, **dadurch gekennzeichnet, daß** man als (a) ein Gemisch einsetzt, das enthält
a1) 50 bis 79 Gew.-% aromatische und/oder araliphatische Carbonsäuren mit mindestens 2 Carboxylgruppen und/oder derivatisierten Carboxylgruppen,
a2) 1 bis 10 Gew.-% aliphatische mehrfunktionelle Carbonsäuren mit mindestens 2 Carboxylgruppen und/oder derivatisierten Carboxylgruppen und
a3) 20 bis 40 Gew.-% Monocarbonsäuren und/oder Monocarbonsäurederivate.

2. Verfahren nach Anspruch 1, **dadurch gekennzeichnet, daß** man als (a2) ungesättigte Dicarbonsäuren und/oder Dicarbonsäurederivate einsetzt.

3. Verfahren nach einem der Ansprüche 1 und 2, **dadurch gekennzeichnet, daß** man als Alkohole Diole und/oder Triole einsetzt.

4. Verfahren nach einem der Ansprüche 1 bis 3, **dadurch gekennzeichnet, daß** man die Kondensation in Gegenwart von Katalysatoren durchführt.

5. Polyesteralkohole erhältlich nach einem Verfahren gemäß den Ansprüchen 1 bis 4.

6. Polyesteralkohole nach Anspruch 5, **dadurch gekennzeichnet, daß** die Polyesteralkohole eine Funktionalität von 2 bis 4, eine Säurezahl von 0,1 bis 2 und ein Molekulargewicht von 400 bis 4500 aufweisen.

7. Verfahren zur Herstellung von Polyisocyanat-Polyadditionsprodukten durch Umsetzung von Isocyanaten mit gegenüber Isocyanaten reaktiven Verbindungen gegebenenfalls in Gegenwart von Treibmitteln, Katalysatoren und/oder Hilfs- und/oder Zusatzstoffen, **dadurch gekennzeichnet, daß** man gegenüber Isocyanaten reaktive Verbindungen enthaltende Polyesteralkohole gemäß Anspruch 5 oder 6 einsetzt.

8. Polyisocyanat-Polyadditionsprodukte erhältlich nach einem Verfahren gemäß Anspruch 7.

## Claims

1. A process for preparing polyester alcohols by condensation of (a) carboxylic acids and/or carboxylic acid derivatives with (b) alcohols, wherein the component (a) used is a mixture comprising
a1) from 1 to 10 % by weight of aromatic and/or araliphatic carboxylic acids having at least 2 carboxyl groups and/or derivatized carboxyl groups,
a2) from 50 to 79 % by weight of aliphatic polyfunctional carboxylic acids having at least 2 carboxyl groups and/or derivatized carboxyl groups and
a3) from 20 to 40 % by weight of monocarboxylic acids and/or monocarboxylic acid derivatives.

2. A process as claimed in claim 1, wherein unsaturated dicarboxylic acids and/or dicarboxylic acid derivatives are used as (a2).

3. A process as claimed in claim 1 or 2, wherein diols and/or triols are used as alcohols.

4. A process as claimed in any of claims 1 to 3, wherein the condensation is carried out in the presence of catalysts.

5. A polyester alcohol obtainable by a process as claimed in any of claims 1 to 4.

6. A polyester alcohol as claimed in claim 5 which has a functionality of from 2 to 4, an acid number of from 0.1 to 2 and a molecular weight of from 400 to 4500.

7. A process for producing polyisocyanate polyaddition products by reacting isocyanates with compounds which are reactive towards isocyanates, in the presence or absence of blowing agents, catalysts and/or auxiliaries and/or additives, wherein the isocyanate-reactive compounds used comprise polyester alcohols as claimed in claim 5 or 6.

8. A polyisocyanate polyaddition product obtainable by a process as claimed in claim 7.

## Revendications

1. Procédé pour la préparation de polyesteralcools par condensation (a) d'acides carboxyliques et/ou de dérivés d'acides carboxyliques avec (b) des alcools, **caractérisé en ce qu'**on met en oeuvre, à titre de (a), un mélange qui contient
a1) à concurrence de 50 à 79 % en poids, des acides carboxyliques aromatiques et/ou araliphatiques contenant au moins 2 groupes carboxyle et/ou carboxyle dérivés
a2) à concurrence de 1 à 10 % en poids, des acides carboxyliques polyfonctionnels aliphatiques contenant au moins 2 groupes carboxyle et/ou carboxyle dérivés
a3) à concurrence de 20 à 40 % en poids, des acides monocarboxyliques et/ou des dérivés d'acides monocarboxyliques.

2. Procédé selon la revendication 1, **caractérisé en ce qu'**on met en oeuvre, à titre de (a2), des acides dicarboxyliques insaturés et/ou des dérivés d'acides dicarboxyliques insaturés.

3. Procédé selon l'une quelconque des revendications 1 et 2, **caractérisé en ce qu'**on met en oeuvre, à titre d'alcools, des diols et/ou des triols.

4. Procédé selon l'une quelconque des revendications 1 à 3, **caractérisé en ce qu'**on effectue la condensation en présence de catalyseurs.

5. Polyesteralcools que l'on obtient conformément à un procédé selon les revendications 1 à 4.

6. Polyesteralcools selon la revendication 5, **caractérisés en ce que** les polyesteralcools présentent une fonctionnalité de 2 à 4, un indice d'acide de 0,1 à 2 et un poids moléculaire de 400 à 4500.

7. Procédé pour la préparation de produits de polyaddition de polyisocyanates par mise en réaction d'isocyanates avec des composés réactifs vis-à-vis d'isocyanates, le cas échéant en présence d'agents moussants, de catalyseurs et/ou d'adjuvants et/ou d'additifs, **caractérisé en ce qu'**on met en oeuvre des polyesteralcools contenant des composés réactifs vis-à-vis d'isocyanates selon la revendication 5 ou 6.

8. Produits de polyaddition de polyisocyanates que l'on obtient conformément à un procédé selon la revendication 7.
